# FASCICULE DE BREVET EUROPEEN

(11) **EP 2 922 269 B1**
(45) Date de publication et mention de la délivrance du brevet: **06.07.2016**
(21) Numéro de dépôt: 15156426.7
(22) Date de dépôt: 24.02.2015
(51) Int. Cl.: H04W 12/06, H04W 12/12, H04W 12/08, H04L 29/06, H04W 4/00

(54) **Routage NFC sécurisé**
Gesichertes NFC-Routing
Secure NFC routing

(30) Priorité: 18.03.2014 FR 1452225
(43) Date de publication de la demande: 23.09.2015
(73) Titulaire: Proton World International N.V., 1831 Diegem (BE); STMICROELECTRONICS (ROUSSET) SAS, 13790 Rousset (FR)
(72) Inventeur: Van Nieuwenhuyze, Olivier, 1970 Wezembeek-Oppem (BE); Ricard, Christophe Henri, 13090 Aix-en-Provence (FR)
(74) Mandataire: Thibon, Laurent

(56) Documents cités:
- FR-A1- 2 969 341
- FR-A1- 2 974 208
- US-A1- 2010 227 553
- US-A1- 2013 059 566

## Description

### Domaine

La présente description concerne le domaine des communications NFC, et en particulier un procédé et un dispositif permettant une modification sécurisée de paramètres de routage NFC.

### Arrière-plan

Les téléphones mobiles et d'autres types de dispositifs mobiles sont de plus en plus souvent équipés d'interfaces NFC (communication en champ proche), qui leur permettent de réaliser des fonctions de transpondeur électromagnétique en plus de leurs autres fonctions. En particulier, de tels dispositifs sont capables d'émuler les fonctions d'un transpondeur électromagnétique, qui pourrait être du type carte sans contact, ou du type lecteur sans contact. Une telle fonctionnalité améliore par exemple le dispositif mobile, en lui permettant d'être utilisé pour diverses applications, par exemple comme portefeuille électronique permettant de réaliser des paiements pour accéder à des services de réseaux de transport.

Pour émuler le fonctionnement d'une carte sans contact, le dispositif mobile est généralement équipé d'un circuit intégré frontal sans contact (CLF), appelé aussi routeur NFC. Ce routeur NFC est équipé d'un émetteur-récepteur radiofréquence (RF) frontal couplé à une antenne à courte portée pour émuler les capacités de communication d'un transpondeur électromagnétique. Dans certaines applications, un élément sécurisé (SE) ou un élément sécurisé intégré (eSE), qui est soit intégré dans le dispositif mobile soit inclus dans un microcircuit du module d'identification d'abonné (SIM), du SIM universel (USIM) ou de l'élément µSD (micro-sécurisé numérique), peut être utilisé pour assurer une authentification.

Le routeur NFC comprend une table de routage NFC, qui indique vers quel dispositif matériel les messages NFC reçus par le routeur NFC doivent être acheminés. Par exemple, certains messages NFC, comme ceux concernant certains types de paiements électroniques, doivent être acheminés vers un élément sécurisé du dispositif mobile. Pour prendre un exemple spécifique, une application VISA peut être en cours d'exécution en communication avec un élément sécurisé d'un USIM. D'autres types de messages NFC doivent être acheminés vers le processeur hôte du dispositif mobile. À titre d'exemple, une application MasterCard peut être en cours d'exécution en mode HCE (émulation de carte par l'hôte), en d'autres termes, dans l'environnement du dispositif hôte (les noms "VISA" et "MasterCard" peuvent correspondre à des marques déposées).

Au vu des informations sensibles qui peuvent passer à travers le routeur NFC, la table de routage NFC doit être sécurisée contre des modifications non autorisées. Toutefois, les solutions existantes sont inefficaces dans certains environnements d'application, et on a donc besoin dans la technique d'un mécanisme de protection robuste.

La demande de brevet US publiée en tant que US 2013/0059566 concerne un procédé de protection d'informations stockées dans un module de sécurité d'un dispositif de communication comprenant un routeur de communication en champ proche (NFC).

La demande de brevet publiée en tant que FR 2969341 concerne un procédé de détection d'une tentative de détournement d'un canal de communication entre un port d'un module de sécurité et un port d'un routeur de communication en champ proche.

### Résumé

Un objet de modes de réalisation de la présente description est de répondre au moins partiellement à un ou plusieurs besoins de l'art antérieur.

Selon un aspect, on prévoit un procédé comprenant : recevoir par un dispositif de traitement d'un dispositif NFC une requête, lancée par une première application chargée dans une mémoire du dispositif NFC, pour modifier un ou plusieurs paramètres d'une table de routage NFC d'un routeur NFC du dispositif NFC, la table de routage NFC comportant des paramètres indiquant les dispositifs vers lesquels des messages NFC doivent être acheminés ; récupérer par le dispositif de traitement un premier identificateur associé à l'application ; transmettre par le dispositif de traitement le premier identificateur au routeur NFC ; et vérifier par le routeur NFC, sur la base du premier identificateur, si l'application est autorisée à modifier la table de routage.

Selon un mode de réalisation, le premier identificateur est une signature numérique de l'application.

Selon un mode de réalisation, le fait de vérifier si l'application est autorisée ou pas à modifier la table de routage comprend un accès par le routeur NFC à une liste d'identificateurs d'applications autorisées à modifier la table de routage, et une vérification que le premier identificateur est sur la liste.

Selon un mode de réalisation, le procédé comprend une modification de la liste d'identificateurs pendant une mise à jour logicielle du dispositif NFC.

Selon un mode de réalisation, le procédé comprend une modification de la liste d'identificateurs pendant une mise à jour sécurisée réalisée par un élément sécurisé du dispositif NFC.

Selon un mode de réalisation, le dispositif de traitement communique avec le routeur NFC en utilisant un premier format de message, et transmet le premier identificateur au routeur NFC en utilisant un deuxième format de message différent du premier format de message.

Selon un mode de réalisation, le premier format de message utilise un premier entête et le deuxième format de message utilise un deuxième entête différent du premier entête.

Selon un mode de réalisation, le dispositif de traitement comprend un pilote de communications adapté à communiquer avec le routeur NFC, le pilote de communications communiquant avec le routeur NFC en utilisant un premier protocole de transmission, et transmettant le premier identificateur au routeur NFC en utilisant un deuxième protocole de transmission différent du premier protocole de transmission.

Selon un mode de réalisation, le deuxième protocole de transmission est différent du premier protocole de transmission en ce qu'il comprend une règle de transmission qui ne peut pas être dupliquée par le dispositif de traitement.

Selon un mode de réalisation, le premier protocole de transmission assure une condition d'arrêt entre des messages consécutifs, et le deuxième protocole de transmission comprend la transmission de deux messages consécutifs sans aucune condition d'arrêt entre eux.

Selon un autre aspect, on prévoit un dispositif NFC comprenant : un dispositif de traitement ; et un routeur NFC comprenant une ou plusieurs mémoires mémorisant une table de routage NFC et une liste d'identificateurs d'une ou plusieurs applications autorisées à modifier la table de routage NFC, le routeur NFC étant adapté à : recevoir un premier identificateur d'une première application chargée dans une mémoire du dispositif de traitement et souhaitant modifier un ou plusieurs paramètres de la table de routage NFC ; et vérifier, sur la base du premier identificateur, si la première application est autorisée ou pas à modifier la table de routage.

Selon un mode de réalisation, le premier identificateur est une signature numérique de l'application.

### Brève description des dessins

Les caractéristiques et avantages susmentionnés, et d'autres, apparaîtront clairement avec la description détaillée suivante de modes de réalisation, donnés à titre d'illustration et non de limitation, en faisant référence aux dessins joints dans lesquels :
la figure 1 illustre schématiquement un dispositif NFC capable de communications NFC selon un exemple de réalisation de la présente description ;
la figure 2 illustre schématiquement le dispositif NFC de la figure 1 plus en détail selon un exemple de réalisation de la présente description ;
la figure 3 représente schématiquement une table de routage d'un routeur NFC selon un exemple de réalisation de la présente description ;
la figure 4 représente schématiquement des composants d'un dispositif NFC selon un exemple de réalisation de la présente description ;
la figure 5 est un organigramme illustrant des opérations dans le procédé de mise à jour d'un paramètre d'une table de routage NFC selon un exemple de réalisation de la présente description ;
la figure 6 illustre une interface NFC de la figure 4 plus en détail selon un exemple de réalisation ;
la figure 7 est un diagramme représentant des interactions entre une application du dispositif NFC et un routeur NFC selon un exemple de réalisation de la présente description ; et
la figure 8 est un chronogramme représentant des signaux d'un protocole de communication avec un routeur NFC selon un exemple de réalisation de la présente description.

### Description détaillée

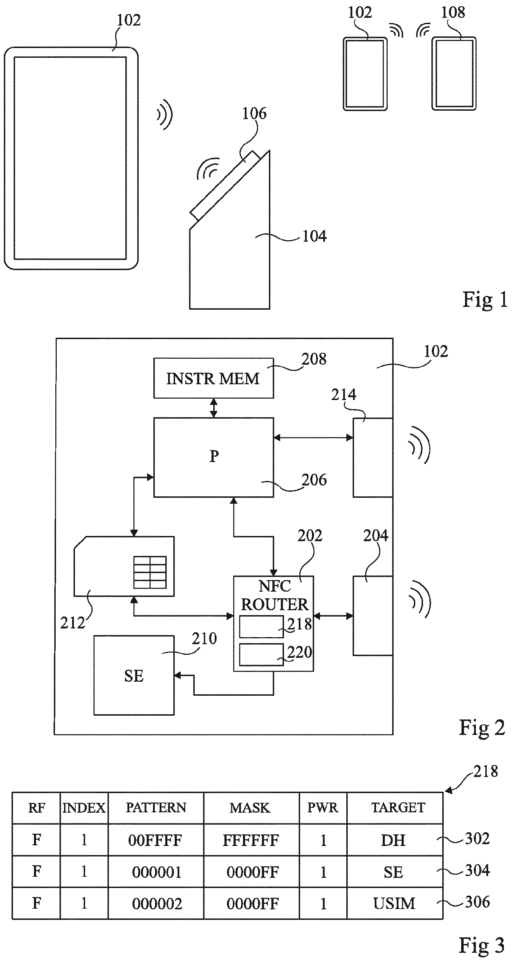

La figure 1 illustre schématiquement un dispositif NFC 102 qui est un dispositif apte à des communications NFC. Par exemple, le dispositif 102 est un dispositif mobile tel qu'un téléphone mobile, un smartphone, une tablette informatique, un lecteur de média numérique ou similaire, équipé de circuits NFC (non illustré en figure 1).

Sur le côté gauche de la figure 1, le dispositif NFC 102 est représenté en communication avec un lecteur 104, comprenant un transpondeur NFC 106. Par exemple, le lecteur 104 est disposé au niveau d'une barrière d'entrée d'une zone à accès restreint, comme un réseau de transport ou similaire. En variante, le lecteur 104 peut être disposé au niveau d'un point de vente dans une boutique ou un restaurant. Lorsqu'il est utilisé avec un tel lecteur, le circuit NFC du dispositif NFC 102 opère par exemple dans un mode d'émulation d'étiquette.

Sur le côté droit de la figure 1, le dispositif NFC 102 est représenté en communication avec un autre dispositif NFC 108 par l'intermédiaire d'une interface NFC. Par exemple, comme le dispositif 102, le dispositif NFC 108 est un dispositif apte à des communications NFC qui pourrait être un dispositif mobile comme un téléphone mobile, un smartphone, une tablette informatique, un lecteur de média numérique ou similaire, équipé de circuits NFC. Pendant une communication avec un autre dispositif NFC, le circuit NFC du dispositif NFC 102 opère par exemple dans un mode de poste à poste, et des communications sont initiées par l'un ou l'autre des dispositifs NFC.

La figure 2 illustre schématiquement le dispositif NFC 102 plus en détail selon un exemple de réalisation.

Comme cela est illustré, le dispositif 102 comprend par exemple un routeur NFC (NFC ROUTER) 202, connu aussi dans la technique sous le nom de frontal sans contact (CLF). Le routeur NFC 202 est couplé à une antenne NFC 204, et ensemble le routeur 202 et l'antenne 204 assurent un circuit NFC pour émuler le comportement d'un transpondeur NFC.

Le routeur NFC 202 est aussi par exemple couplé à un dispositif de traitement hôte (P) 206 du dispositif NFC 102. Le dispositif 206 comprend par exemple un ou plusieurs processeurs sous le contrôle d'instructions mémorisées dans une mémoire d'instructions (INSTR MEM) 208. La mémoire d'instructions 208 est par exemple une mémoire Flash, et mémorise une ou plusieurs applications (non illustré en figure 1) qui ont été chargées sur le dispositif. Le routeur NFC 202 est aussi par exemple couplé à d'autres dispositifs, parmi lesquels un élément sécurisé (SE) 210 et un circuit USIM (module d'identification d'abonné universel) 212 sont illustrés. L'élément sécurisé 210 est par exemple un SE intégré (eSE), et le circuit USIM 212 est par exemple couplé au routeur NFC par l'intermédiaire d'une liaison SWP (protocole à un seul fil), et est en outre couplé au dispositif de traitement hôte 206.

Le dispositif de traitement hôte 206 est par exemple couplé à une ou plusieurs antennes 214, qui permettent par exemple des commutations dans un réseau cellulaire et/ou des communications sans fil selon d'autres normes comme les normes Wifi, Bluetooth, etc.

Le routeur NFC 202 comprend par exemple une ou plusieurs mémoires mémorisant une table de routage NFC 218 et une liste 220 d'identificateurs d'applications autorisées à modifier la table de routage NFC. La table de routage NFC 218 définit des règles pour le traitement de messages NFC reçus par le routeur NFC 202. En particulier, les messages peuvent être considérés comme étant destinés soit au dispositif de traitement 206 soit à l'un des éléments sécurisés 210, 212.

La figure 3 représente un exemple de la table de routage 218 du routeur NFC 202 selon un exemple de réalisation. Cette table est par exemple mise en oeuvre sous la forme d'une table de correspondance (LUT).

La table 218 comprend cinq colonnes de paramètres représentant des entrées dans une table qui comprennent : une colonne de technologie RF (RF) indiquant la technologie RF NFC de la communication ; une colonne d'index (INDEX), une colonne de motif (PATTERN) et une colonne de masque (MASK) indiquant des conditions concernant une partie du message d'entrée, où l'index indique le multiplet du message à prendre en compte, le motif définit certains motifs de bits de la charge utile et le masque indique les bits qui doivent être pris en compte ; et un champ d'alimentation (PWR) indiquant si le dispositif est en marche, à l'arrêt, ou si sa batterie est hors service. La colonne de droite en figure 3 comprend un paramètre (TARGET), pour chaque rangée de la table, qui indique vers quel dispositif cible le message correspondant doit être acheminé.

Dans l'exemple de la figure 3, l'index est à "1" pour chaque rangée, ce qui indique par exemple qu'un premier multiplet de la charge utile du message doit être pris en compte. Dans le première rangée 302 de la table, le champ de motif est le motif hexadécimal "00FFFF", le masque est égal à "FFFFFF", ce qui signifie que le motif complet doit être pris en compte, et la cible est l'hôte de dispositif (DH), en d'autre termes le dispositif de traitement 206. Dans une deuxième rangée 304 de la table, le champ de motif est un motif hexadécimal "000001", le masque est égal à "0000FF", ce qui signifie que seules les deux dernières valeurs hexadécimales doivent être prises en compte, et la cible est l'élément sécurisé 210. Dans la troisième rangée 306 de la table, le champ de motif est le motif hexadécimal "000002", le masque est égal à "0000FF", ce qui signifie de nouveau que seules les deux dernières valeurs hexadécimales doivent être prises en compte, et la cible est l'USIM 212.

La figure 3 n'est qu'un exemple de table de routage NFC basé sur une reconnaissance de motif. Les modes de réalisation décrits ici peuvent être appliqués à une grande gamme de tables de routage différentes, dans lesquelles le routage est défini par un ou plusieurs des éléments suivants :
la technologie RF utilisée pour le message NFC ;
le protocole RF utilisé pour le message NFC ;
la reconnaissance d'un motif dans le message NFC ;
une commande de sélection, par exemple conformément à la norme ISO7816 basée sur une valeur AID (identificateur d'application).

Une modification non autorisée de la table de routage 218 pourrait par exemple provoquer le routage de messages sensibles destinés à l'élément sécurisé 210 ou à l'USIM 212 vers le dispositif de traitement hôte ce qui conduirait à une brèche de sécurité potentielle, ou à un refus de service (DoS), ce que les utilisateurs trouvent en général très insatisfaisant.

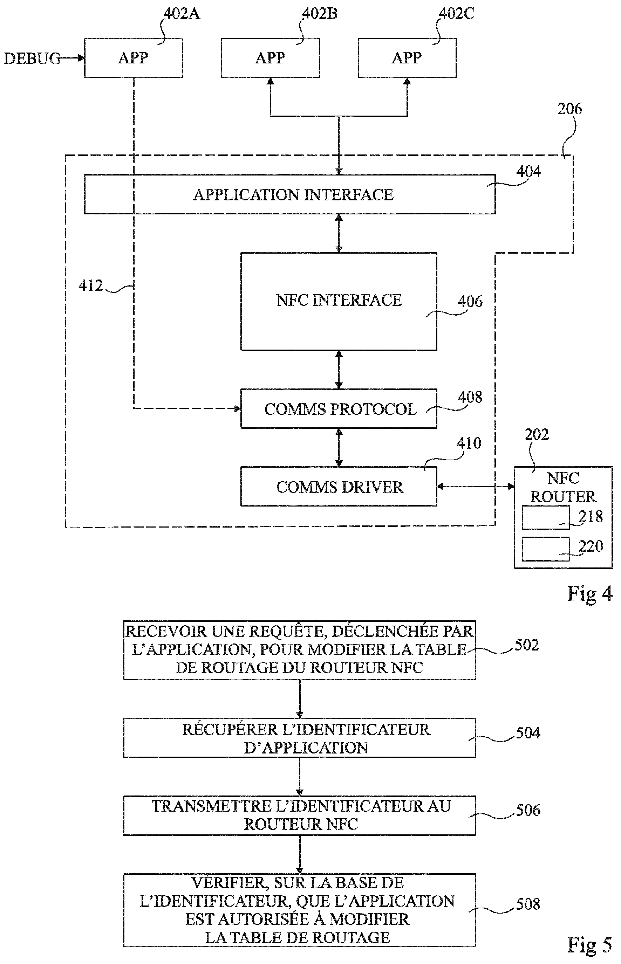

La figure 4 représente schématiquement des éléments du dispositif NFC 102 pour réaliser des fonctions NFC. Le dispositif NFC 102 mémorise par exemple dans sa mémoire d'instructions 208 trois applications (APP) 402A, 402B et 402C qui comprennent une fonctionnalité NFC. Une telle application, qui s'exécute par exemple dans l'environnement Java en utilisant une JVM (Machine Java Virtuelle), est appelée dans certains environnements Wallet. Par exemple, les applications 402A, 402B et 402C impliquent des fonctions d'émulation de carte NFC pour émuler une carte de paiement ou un badge de sécurité, des fonctions de lecteur de carte pour lire une étiquette NFC, et/ou des fonctions de poste à poste permettant des communications avec un autre dispositif NFC.

Les applications 402A, 402B et 402C sont couplées au dispositif de traitement 206, qui comprend par exemple les éléments fonctionnels suivants pour s'interfacer avec le routeur NFC 202 : une interface d'application (APPLICATION INTERFACE) 404, une interface NFC (NFC INTERFACE) 406, un module de protocole de communications (COMMS PROTOCOL) 408 et un pilote de communications (COMMS DRIVER) 410 couplé au routeur NFC 202. L'interface d'application 404 correspond par exemple à un cadre logiciel qui a connaissance des diverses applications mémorisées dans le dispositif, et permet à ces applications d'être appelées. Le module de protocole de communication 408 applique un protocole pour les échanges avec le routeur NFC 202, et le pilote de communication 410 applique un protocole de transmission pour transmettre des trames NFC sur la liaison physique vers le routeur NFC 202. Dans certains modes de réalisation le pilote 410 utilise l'interface I2C. L'interface NFC 406 assure par exemple une interface entre les applications et les modules 408 et 410 responsables de la communication avec le routeur NFC 202.

Une certaine protection contre des modifications non autorisées de la table de routage 218 peut être mise en oeuvre par l'interface NFC 406, ce qui peut empêcher certaines applications de réaliser une telle modification. Cependant, dans certains cas, il peut être possible de contourner l'interface NFC 406. Par exemple, comme cela est représenté par une flèche en pointillés 412 en figure 4, un logiciel malveillant peut provoquer le passage dans un mode de débogage, par intermédiaire de l'application 402A, de sorte que cette application peut communiquer directement avec le module de protocole de communication 408, en contournant l'interface NFC 406. Par conséquent, selon le mode de réalisation décrit ici, la liste 220 d'applications autorisées mémorisée par le routeur NFC 202 assure un mécanisme de protection alternatif ou additionnel, comme on va le décrire maintenant plus en détail en référence à la figure 5.

La figure 5 est un organigramme représentant des opérations dans un procédé d'empêchement de modification non autorisée de la table de routage NFC 218 selon un exemple de réalisation. On suppose que l'application 402A de la figure 4 a effectué une requête pour modifier un ou plusieurs paramètres de la table de routage 218.

Dans une première opération 502, la requête pour modifier la table de routage du routeur NFC est reçue par le module de protocole de communication 408 du dispositif de traitement 206. Cette requête est par exemple reçue par intermédiaire de l'interface NFC 406 du dispositif de traitement 206. En variante, comme cela a été décrit précédemment, dans le cas de présence de logiciel malveillant sur le dispositif, l'interface NFC 406 peut être contournée, la requête étant reçue par le module de protocole de communication 408 directement à partir de l'application.

Dans une opération suivante 504, un identificateur de l'application est récupéré par le module de protocole de communication 408. Par exemple, le module 408 demande à l'interface NFC 406 une signature de l'application qui a lancé la requête. Une telle signature est par exemple unique pour l'application, et est attribuée à l'application par le fournisseur du système d'exploitation ou le fabriquant du dispositif NFC 102 pour lui permettre d'être installée sur le dispositif.

Dans une opération suivante 506, l'identificateur est transmis au routeur NFC 202, par l'intermédiaire du pilote de communication 410, sous la forme d'une requête de vérification. En outre, comme on va le décrire plus en détail ici après, dans certains modes de réalisation cette requête peut être en outre sécurisée en adaptant le protocole de transmission de messages, afin que le routeur NFC 202 puisse vérifier que la requête de vérification provient bien du module de protocole de communication 408.

Dans une opération suivante 508, le routeur NFC 202 vérifie, sur la base de l'identificateur, si l'application est autorisée à modifier la table de routage 218.

Comme cela a été mentionné précédemment, le routeur NFC 202 mémorise par exemple dans une mémoire une liste 220 des signatures de toutes les applications autorisées. Cette liste peut par exemple être seulement modifiée pendant une session sécurisée, par exemple une mise à jour de logiciel assurée par un fournisseur de logiciel du dispositif NFC. En particulier, si un développeur d'application souhaite que son application soit autorisée à modifier la table de routage, il demande par exemple que le fabriquant du dispositif ou le fournisseur du système d'exploitation ajoute la signature de son application à la liste 220 d'applications autorisées. Cette modification peut ensuite être faite pendant une mise à jour logicielle ultérieure, qui est réalisée pendant une session sécurisée, par exemple protégée en utilisant un MAC (code d'authentification de message). En outre, dans certains modes de réalisation la liste peut en plus ou à la place être modifiée pendant une mise à jour sécurisée réalisée par un élément sécurisé du dispositif NFC, par exemple pendant une session d'administration sécurisée.

Si la signature de l'application est sur la liste d'identificateurs d'applications autorisées, le routeur NFC 202 permet par exemple la modification de la table de routage, alors que si la signature n'est pas sur la liste, le routeur NFC 202 par exemple informe le protocole de communication 408 de la réponse négative, et la requête de modification est refusée.

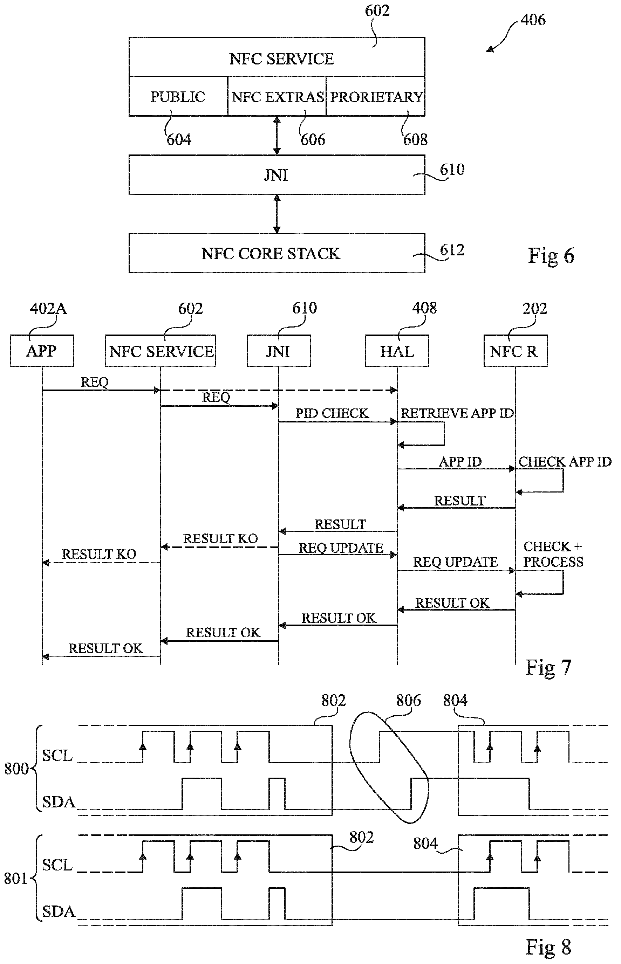

La figure 6 illustre plus en détail des éléments de l'interface NFC 406 selon un exemple de réalisation dans lequel le dispositif NFC utilise un système d'exploitation Android, qui est par exemple Android KitKat (les noms "Android" et "Android KitKat" peuvent correspondre à des marques déposées).

L'interface 406 comprend par exemple un module de services NFC (NFC SERVICE) 602, comportant un sous-module public (PUBLIC) 604, qui prend en charge des fonctionnalités NFC disponibles pour toutes les applications, comprenant des mécanismes de routage, un sous-module "NFC EXTRAS" 606, qui prend en charge des fonctionnalités associées à des éléments sécurisés assurant un accès restreint, et un sous-module propriétaire (PROPRIETARY) 608. Les mécanismes de routage ne sont par exemple pas protégés par la sécurité associée au sous-module NFC EXTRAS 606, ce qui conduit à une faiblesse potentielle qui pourrait permettre une modification non autorisée de la table de routage.

Le module de services NFC 602 communique avec une JNI (Interface Native Java), ce qui assure une interface entre l'interface d'applications 404 et le Monde Natif (Native World), en d'autres termes des noyaux interprétés directement par le dispositif de traitement 206. La JNI 610 communique à son tour avec une pile de noyau NFC (NFC CORE STACK) 612, qui assure la gestion d'opérations NFC.

La figure 7 illustre un exemple de communications entre l'application (APP) 402A demandant de modifier un paramètre de la table de routage, et le routeur NFC (NFC R) 202, par l'intermédiaire du module de service NFC (NFC SERVICE) 602, de la JNI 610 et de l'interface de communication 408 dans le cas où c'est une interface HAL (couche d'abstraction de matériel).

L'application 402A lance le processus en faisant une requête (REQ) au module de services NFC 602 pour mettre à jour un paramètre de routage. La requête est transférée par le module 602, accompagnée du PID d'application (identificateur de processus), vers la JNI 610. L'identificateur de processus PID accompagne par exemple la requête provenant de l'application 402A et indique quelle application a effectué la requête. La JNI lance ensuite une vérification de nom (PID CHECK), à réaliser par le HAL 408. Cette vérification de nom est transmise au HAL 408, par intermédiaire de la pile de noyau NFC 612 (non représenté en figure 7).

En variante, comme cela est représenté par une flèche en pointillés en figure 7, dans certaines circonstances, par exemple dans le cas de présence de logiciel malveillant sur le dispositif NFC, une requête de vérification de nom pourrait être transmise par l'application 402A directement au HAL 408, en contournant le module de services NFC 602 et la JNI 610.

Le HAL 408 reçoit la requête et récupère du module de services NFC 602 un identificateur d'application (APP ID) associé à l'application. Par exemple, l'identificateur d'application est la signature numérique de l'application.

Le HAL 408 transmet ensuite l'identificateur d'application au routeur NFC 202, par intermédiaire du pilote de communications 410 (non représenté en figure 7). Le routeur NFC 202 vérifie si l'identificateur d'application correspond à une application autorisée (CHECK APP ID), et renvoie le résultat (RESULT) au HAL 408. Le résultat est transféré par le HAL 408 à la JNI 610.

Dans le cas où le résultat est positif, par exemple où l'identificateur d'application APP ID était sur une liste d'applications autorisées, la JNI 610 transmet ensuite la requête de mise à jour de la table de routage (REQ UPDATE) au HAL 408, qui à son tour transmet cette requête au routeur NFC 202. Le routeur NFC 202 par exemple vérifie que l'identificateur d'application a été vérifié en relation avec cette requête puis traite la requête et met à jour le paramètre de la table de routage comme indiqué dans la requête. Un signal de confirmation (RESULT OK) est par exemple transmis par le routeur NFC 202 au HAL 408, qui est à son tour transféré par le HAL 408, la JNI 610 et le module de services NFC 602 à l'application 402A.

Autrement, dans le cas où le résultat fourni par le routeur NFC et reçu par la JNI 610 est négatif, c'est-à-dire où l'application n'est pas autorisée à modifier la table de routage, la JNI 610 envoie par exemple un message d'échec (RESULT KO) au module de services NFC 602, qui à son tour transfère ce résultat à l'application 402.

Comme cela a été mentionné précédemment, la requête pour la vérification de l'identificateur d'application, qui dans la figure 7 est transmise par le HAL 408 au routeur NFC, utilise par exemple un protocole unique, distinct du protocole normal utilisé pour des messages entre le module de protocole de communication 408 et le routeur NFC 202. Cela assure par exemple une vérification supplémentaire que le module 408 n'a pas été contourné. Par exemple, la trame NFC d'un message standard comporte les éléments suivants :
- MT+GID/Conn ID, qui représente le type de message, l'identificateur de groupe et/ou l'identificateur de connexion ciblé par le message ;
- OID/RFU, (Identificateur d'Objet/Réservé pour Utilisation Future), qui représente des informations complémentaires concernant le type de message et/ou la connexion visée ;
- LEN, qui représente la longueur du message ; et
- une charge utile contenant les données à transporter par le message.

Selon les modes de réalisation décrits ici, cette trame NFC standard est par exemple mise à jour de façon à inclure l'un de deux entêtes additionnels, un premier entête additionnel étant utilisé pour des messages standards, et un autre entête additionnel différent étant utilisé pour des requêtes de vérification d'un identificateur d'application. Par exemple, l'entête additionnel utilisé pour une trame normale est "0x01", alors que l'entête additionnel utilisé pour une vérification d'identificateur est "0x02".

En plus ou à la place, le module de protocole de communications 408 provoque la modification par le pilote de communications 410 de son protocole transmission dans le cas d'une requête de vérification d'un identificateur d'application. Dans ce cas, le pilote 410 récupère par exemple l'identificateur d'application à partir du module de services NFC 602, en plus ou à la place du HAL 408. La modification du protocole de transmission implique par exemple l'application d'une nouvelle règle de transmission qui ne peut être dupliquée par aucune application de couche supérieure. En outre, le routeur NFC est par exemple le seul dispositif capable d'interpréter et de traiter des messages transmis selon cette nouvelle règle de transmission.

Selon un exemple, le pilote de communications 410 applique le protocole de transmission I2C, et la requête est transmise sur deux trames consécutives qui ne sont pas séparées par une condition d'arrêt, comme on va le décrire maintenant plus en détail en référence à la figure 8.

La figure 8 est un chronogramme représentant un exemple de certains des signaux sur une ligne d'horloge SCL et une ligne de données SDA entre le pilote 410 et le routeur NFC 202 selon le protocole I2C dans le cas d'une communication standard 800, et dans le cas d'une communication 801 demandant une vérification d'un identificateur d'application.

Pour la communication standard 800, deux trames consécutives 802, 804 sont séparées par une condition d'arrêt 806, qui correspond par exemple à un front montant sur la ligne de données SDA pendant que la ligne d'horloge SCL est à l'état haut.

Pour la communication 801 demandant une vérification d'un identificateur d'application, la condition d'arrêt entre les trames 802 et 804 est supprimée. On notera qu'une telle modification du protocole ne va pas impacter d'autres esclaves présents sur la ligne, puisque cela sera transparent pour eux, et l'esclave visé, c'est-à-dire le routeur NFC, est par exemple adapté pour gérer des trames modifiées de cette façon.

Un avantage des modes de réalisation décrits ici est de prévoir un mécanisme de protection robuste contre des modifications non autorisées de la table de routage NFC d'un routeur NFC.

Avec la description ainsi faite d'au moins un mode de réalisation illustratif, diverses altérations, modifications et améliorations apparaîtront facilement à l'homme de l'art.

Par exemple, bien que des modes de réalisation détaillés aient été décrits en relation avec le système d'exploitation Android, il sera clair pour l'homme de l'art que les enseignements donnés ici pourraient être appliqués à d'autres systèmes d'exploitation de dispositifs NFC, comme le système iOS (le nom "iOS" peut correspondre à une marque déposée).

## Revendications

1. Procédé comprenant :
recevoir par un dispositif de traitement (206) d'un dispositif NFC (102) une requête, lancée par une première application (402A) chargée dans une mémoire (208) du dispositif NFC, pour modifier un ou plusieurs paramètres d'une table de routage NFC (218) d'un routeur NFC (202) du dispositif NFC, la table de routage NFC comportant des paramètres indiquant les dispositifs (206, 210, 212) vers lesquels des messages NFC doivent être acheminés ;
récupérer par le dispositif de traitement un premier identificateur associé à la première application ;
transmettre par le dispositif de traitement le premier identificateur au routeur NFC ; et
vérifier par le routeur NFC, sur la base du premier identificateur, si la première application est autorisée ou pas à modifier la table de routage.

2. Procédé selon la revendication 1, dans lequel le premier identificateur est une signature numérique de la première application.

3. Procédé selon la revendication 1 ou 2, dans lequel le fait de vérifier si la première application est autorisée ou pas à modifier la table de routage comprend un accès par le routeur NFC à une liste (220) d'identificateurs d'applications autorisées à modifier la table de routage, et une vérification que le premier identificateur est sur la liste.

4. Procédé selon la revendication 3, comprenant une modification de la liste d'identificateurs pendant une mise à jour logicielle du dispositif NFC.

5. Procédé selon la revendication 4, comprenant une modification de la liste d'identificateurs pendant une mise à jour sécurisée réalisée par un élément sécurisé du dispositif NFC.

6. Procédé selon l'une quelconque des revendications 1 à 5, dans lequel le dispositif de traitement communique avec le routeur NFC en utilisant un premier format de message, et transmet le premier identificateur au routeur NFC en utilisant un deuxième format de message différent du premier format de message.

7. Procédé selon la revendication 6, dans lequel le premier format de message utilise un premier entête, et le deuxième format de message utilise un deuxième entête différent du premier entête.

8. Procédé selon l'une quelconque des revendications 1 à 7, dans lequel le dispositif de traitement comprend un pilote de communications (410) adapté à communiquer avec le routeur NFC, et dans lequel le pilote de communications communique avec le routeur NFC en utilisant un premier protocole de transmission, et transmet le premier identificateur au routeur NFC en utilisant un deuxième protocole de transmission différent du premier protocole de transmission.

9. Procédé selon la revendication 8, dans lequel le deuxième protocole de transmission est différent du premier protocole de transmission en ce qu'il comprend une règle de transmission qui ne peut pas être dupliquée par le dispositif de traitement.

10. Procédé selon la revendication 8 ou 9, dans lequel le premier protocole de transmission assure une condition d'arrêt entre des messages consécutifs, et le deuxième protocole de transmission comprend la transmission de deux messages consécutifs sans aucune condition d'arrêt entre eux.

11. Dispositif NFC comprenant :
un dispositif de traitement (206) ; et
un routeur NFC (202) comprenant une ou plusieurs mémoires (218, 220) mémorisant une table de routage NFC et une liste d'identificateurs d'une ou plusieurs applications autorisées à modifier la table de routage NFC, le routeur NFC étant adapté à :
recevoir un premier identificateur d'une première application chargée dans une mémoire (208) du dispositif de traitement et souhaitant modifier un ou plusieurs paramètres de la table de routage NFC ; et
vérifier, sur la base du premier identificateur, si la première application est autorisée ou pas à modifier la table de routage.

12. Dispositif NFC selon la revendication 11, dans lequel le premier identificateur est une signature numérique de la première application.

## Patentansprüche

1. Ein Verfahren, wobei das Verfahren folgende Schritte aufweist:
Empfangen, durch ein Verarbeitungsgerät (206) eines NFC Gerätes (102), einer Anfrage, die durch eine erste Applikation (402A) initiiert wird, die in einen Speicher (208) des NFC Gerätes geladen wird, zum Modifizieren von einem oder mehreren Parametern einer NFC Routing Tabelle (218) eines NFC Routers (202) des NFC Gerätes, wobei die NFC Routing Tabelle Parameter aufweist, die die Geräte (206, 210, 212) anzeigt, an die NFC Nachrichten geroutet werden sollen;
Abrufen, durch das Verarbeitungsgerät, eines ersten Identifizierers, der mit der Applikation assoziiert ist;
Senden, durch das Verarbeitungsgerät, des ersten Identifizierers an den NFC Router; und
Verifizieren, durch den NFC Router, basierend auf dem ersten Identifizierer, ob die Applikation autorisiert ist die Routing Tabelle zu modifizieren oder nicht.

2. Das Verfahren nach Anspruch 1, wobei der erste Identifizierer eine digitale Signatur der Applikation ist.

3. Das Verfahren nach den Ansprüchen 1 oder 2, wobei das Verifizieren ob die Applikation autorisiert ist die Routing Tabelle zu modifizieren oder nicht das Zugreifen, durch den Router, auf eine Liste (220) von Identifizieren von Applikationen aufweist, die autorisiert sind die Routing Tabelle zu modifizieren und das Verifizieren, dass der erste Identifizierer auf der Liste ist, aufweist.

4. Das Verfahren nach Anspruch 3, wobei das Verfahren das Modifizieren der Liste von Identifizierern während einer Softwareaktualisierung des NFC Gerätes aufweist.

5. Das Verfahren nach Anspruch 4, wobei das Verfahren das Modifizieren der Liste von Identifizierern während einer Sicherheitsaktualisierung aufweist, die durch ein Sicherheitselement des NFC Gerätes ausgeführt wird.

6. Das Verfahren nach einem der Ansprüche 1 bis 5, wobei das Verarbeitungsgerät mit dem NFC Router unter der Verwendung eines ersten Nachrichtenformats kommuniziert und wobei es den ersten Identifizierer an den NFC Router unter der Verwendung eines zweiten Nachrichtenformats, das unterschiedlich zu dem ersten Nachrichtenformat ist, sendet.

7. Das Verfahren nach Anspruch 6, wobei das erste Nachrichtenformat einen ersten Header bzw. Kopf verwendet und wobei das zweite Nachrichtenformat einen zweiten Header verwendet, der unterschiedlich zu dem ersten Header ist.

8. Das Verfahren nach einem der Ansprüche 1 bis 7, wobei das Verarbeitungsgerät einen Kommunikationstreiber (410) aufweist, der geeignet ist mit dem NFC Router zu Kommunizieren und wobei der Kommunikationstreiber mit dem NFC Router kommuniziert unter der Verwendung eines ersten Sendeprotokolls, und wobei der Kommunikationstreiber den ersten Identifizierer an den NFC Router sendet, unter der Verwendung eines zweiten Sendeprotokolls, das unterschiedlich zu dem ersten Sendeprotokoll ist.

9. Das Verfahren nach Anspruch 8, wobei das zweite Sendeprotokoll unterschiedlich zu dem ersten Sendeprotokoll ist in dem es eine Senderegel aufweist, die von dem Verarbeitungsgerät nicht vervielfältigt werden kann.

10. Das Verfahren nach den Ansprüchen 8 oder 9, wobei das erste Sendeprotokoll eine Stoppbedingung zwischen aufeinanderfolgenden Nachrichten bereitstellt, und wobei das zweite Sendeprotokoll das Senden von zwei aufeinanderfolgenden Nachrichten ohne eine Stoppbedingung zwischen ihnen aufweist.

11. Ein NFC Gerät, wobei das NFC Gerät Folgendes aufweist:
ein Verarbeitungsgerät (206); und
einen NFC Router (202), wobei der NFC Router einen oder mehrere Speicher (218, 220) aufweist, die eine NFC Routing Tabelle speichern und eine Liste von Identifizierern von einer oder mehrerer Applikationen, die autorisiert sind die NFC Routing Tabelle zu modifizieren, wobei der NFC Router geeignet ist die folgenden Schritte auszuführen:
Empfangen eines ersten Identifizierers einer ersten Applikation, die in einen Speicher (208) des Verarbeitungsgerätes geladen ist und einen oder mehrere Parameter der NFC Routing Tabelle modifizieren will; und
Verifizieren, basierend auf dem ersten Identifizierer, ob die erste Applikation autorisiert ist die Routing Tabelle zu modifizieren oder nicht.

12. Das NFC Gerät nach Anspruch 11, wobei der erste Identifizierer eine digitale Signatur der Applikation ist.

## Claims

1. A method comprising:
receiving by a processing device (206) of an NFC device (102) a request, initiated by a first application (402A) loaded in a memory (208) of the NFC device, to modify one or more parameters of an NFC routing table (218) of an NFC router (202) of the NFC device, the NFC routing table having parameters indicating the devices (206, 210, 212) to which NFC messages are to be routed;
retrieving by the processing device a first identifier associated with the application;
transmitting by the processing device the first identifier to the NFC router; and
verifying by the NFC router, based on the first identifier, whether or not the application is authorized to modify the routing table.

2. The method of claim 1, wherein the first identifier is a digital signature of the application.

3. The method of claim 1 or 2, wherein verifying whether or not the application is authorized to modify the routing table comprises accessing by the NFC router a list (220) of identifiers of applications authorized to modify the routing table, and verifying that the first identifier is on the list.

4. The method of claim 3, comprising modifying said list of identifiers during a software update of said NFC device.

5. The method of claim 4, comprising modifying said list of identifiers during a secure update performed by a secure element of the NFC device.

6. The method of any of claims 1 to 5, wherein the processing device communicates with the NFC router using a first message format, and transmits the first identifier to the NFC router using a second message format different to the first message format.

7. The method of claim 6, wherein the first message format uses a first header, and the second message format uses a second header different to the first header.

8. The method of any of claims 1 to 7, wherein the processing device comprises a communications driver (410) adapted to communicate with the NFC router, and wherein the communications driver communicates with the NFC router using a first transmission protocol, and transmits the first identifier to the NFC router using a second transmission protocol different to the first transmission protocol.

9. The method of claim 8, wherein the second transmission protocol is different from the first transmission protocol in that it comprises a transmission rule that cannot be duplicated by the processing device.

10. The method of claim 8 or 9, wherein the first transmission protocol provides a stop condition between consecutive messages, and the second transmission protocol comprises transmitting two consecutive messages with no stop condition between them.

11. An NFC device comprising:
a processing device (206); and
an NFC router (202) comprising one or more memories (218, 220) storing an NFC routing table and a list of identifiers of one or more applications authorized to modify the NFC routing table, wherein the NFC router is adapted to:
receive a first identifier of a first application loaded in a memory (208) of the processing device and wishing to modify one or more parameters of the NFC routing table; and
verify, based on the first identifier, whether or not the first application is authorized to modify the routing table.

12. The NFC device of claim 11, wherein the first identifier is a digital signature of the application.
